## Europäisches Patentamt
## European Patent Office
## Office européen des brevets

(19)

(11) Publication number: **0 110 519**
**B1**

(12)

# EUROPEAN PATENT SPECIFICATION

(45) Date of publication of patent specification: **23.08.89**

(51) Int. Cl.⁴: **H 01 R 4/70**

(21) Application number: **83305903.3**

(22) Date of filing: **29.09.83**

(54) Heat recoverable coupling assembly.

(30) Priority: **01.10.82 US 432200**
**14.09.83 US 531961**

(43) Date of publication of application:
**13.06.84 Bulletin 84/24**

(45) Publication of the grant of the patent:
**23.08.89 Bulletin 89/34**

(84) Designated Contracting States:
**AT BE CH DE FR IT LI NL SE**

(56) References cited:
**FR-A-2 260 887**
**FR-A-2 316 464**
**FR-A-2 331 893**
**US-A-3 859 455**
**US-A-3 963 321**

(73) Proprietor: **RAYCHEM CORPORATION (a Delaware corporation)**
**300 Constitution Drive**
**Menlo Park, California 94025 (US)**

(72) Inventor: **McMills, Corey John**
**721 Distel Drive**
**Los Altos California (US)**
Inventor: **Siden, Dennis Carl**
**9 Vista Verde Way**
**Portola Valley California 94025 (US)**

(74) Representative: **Jones, David Colin et al**
**Raychem Limited Intellectual Property Law Department Faraday Road Dorcan**
**Swindon, Wiltshire SN3 5HH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to couplings for substrates having rigid outer walls. More particularly this invention relates to such couplings which include heat recoverable driver members.

There are a broad range of couplings for terminating, splicing or connecting various types of substrates such as coaxial cables and pipes. However, typical couplings have proven unsatisfactory for connecting and terminating such substrates which have rigid outer walls, e.g. rigid walled coaxial cables. As referred to herein, rigid walled coaxial cables means cables having an inner conductor and an outer jacket having the mechanical properties of being substantially inflexible, stiff or hard. An example of such a cable is a CATV cable which includes a centre conductor surrounded by a foam dielectric and a rigid outer shielding jacket surrounding the foam dielectric. The shielding jacket is typically made from aluminum. While rigid, the aluminium jacket has the property of being malleable.

Such cables are generally exposed to the outdoor environment. It will be appreciated that the cables including their connections and terminations are exposed to all types of weather conditions. Such conditions may include temperature changes of 55°C or more within a twenty-four hour period. Additionally the connections and terminations must be able to withstand water, ice, snow, extreme heat and cold and ultraviolet radiation, oxidation, pollution and salt spray.

Additionally, the tolerance limits for a given diameter cable may be quite broad. For example, cables of 12.7 mm (.500 inch) diameter typically vary from 12.5 to 12.9 mm (.493 to .507 inch). Thus, any suitable coupling must be able to accommodate such diameter differences.

One such coupling for such cables is a threaded coupling having two outer members which are threaded to one another and sealed by means of an O-ring. The coupling also includes two inside members, each having a tapered inside surface. The inside members grip the jacket deforming it to a smaller diameter such that a split ring between the inside members grips the jacket at the deformed portion. O-rings are used to seal the inside and outside members. An example of such mechanical compression connector or coupling is U.S.—A—4,346,958.

Heat recoverable couplings for metallic tubings have previously been disclosed, for example in U.S.—A—4,135,743. This patent discloses a coupling for metallic tubing comprising a hollow member fabricated from heat recoverable metal material and sized to recover upon heating to grip the tubing. The coupling may include a tapered portion with the wall thickness of each tapered portion decreasing away from the main body section.

Other couplings which include a heat recoverable metal driver member are described in U.S.—A—3,990,765. This patent discloses a connector for terminating the shielding of multiconductor cables. The connector includes a grounding member (connector body) and a fastening means made from heat recoverable metal which is positioned inside the grounding member to grip and terminate flexible shielding braid.

Such heat recoverable metallic couplings have comparatively high compression strength and as disclosed in U.S.—A—4135743 may include teeth which penetrate the surface of metallic tubing upon recovery. Such couplings have little transverse dimensional change, i.e. diametrical change upon recovery, generally recovery is in the range of two to five percent. Further such couplings are made from memory metal alloy including nickel titanium alloy and copper alloy. Such heat recoverable metal couplings may, upon recovery, have sufficient compression strength to cut through the rigid wall of a substrate of the type described herein. Where the wall of the substrate serves as an EMI shield, such a cut will encourage EMI leakage. Additionally, the relatively little transverse dimensional change of the heat recoverable metal couplings may prove to be unsatisfactory in accommodating the broad tolerance range of some substrates, particularly the commercially available coaxial cables described above.

Heat recoverable couplings made from polymeric material such as those disclosed in U.S.—A—3,320,355 have been disclosed for use in connecting or terminating flexible coaxial cable wires or shields, respectively. US—A—3,320,355 discloses a sleeve of heat-recoverable plastic material having a plurality of metallic clamp members disposed about the inner surface of the sleeve for receiving wires to be connected. The wires include a layer of soft dielectric. The connection is obtained by heating the sleeve and compressing the clamp members to penetrate the soft dielectric and thereby connect the wires. US—A—3320356 discloses using heat shrinkable polyvinyl tubing. While the recovery force of the heat shrinkable polyvinyl sleeve may be sufficient to penetrate the soft dielectric of a cable, it would be insufficient to penetrate the surface of a rigid wall of a substrate, for example where the wall is made from aluminium or copper.

FR—A—2316464, cited by the EPO, and equivalent to GB—A—1567710 discloses a coupling device for joining together at least two substrates, comprising an inner member and an outer member, said outer and inner members defining between them space into which the substrates can be inserted, the inner member having disposed thereon and externally thereof a fusible material to bond the substrates together.

An object of this invention is to provide a heat-recoverable coupling assembly which is capable of being connected to an elongate substrate having a relatively rigid outer wall.

Another object of this invention is to provide a heat-recoverable coupling assembly which is capable of deforming the rigid wall of a substrate while not destroying it.

Another object of this invention is to provide a heat-recoverable coupling assembly which terminates the rigid outer jacket of coaxial cable.

The present invention provides a coupling assembly for coupling to a substrate having a relatively rigid outer wall, the assembly comprising a connector body positionable relative to the substrate such that mating areas of the substrate outer wall and the connector body are at least in part adjacent, the connector mating area being within an outer wall mating area of the substrate, and a dimensionally-recoverable driver member made from a heat-recoverable material having the property of plasticity, the driver member being capable of surrounding the positioned connector body and substrate outer wall combination over at least a portion of the mating area and being capable of dimensional recovery from an unrecovered configuration in which the transverse dimension is greater than that of the positioned connector body and substrate outer wall combination to a recovered configuration in which the transverse dimension is smaller than that of the positioned connector body and substrate outer wall combination, the driver member being plastically deformable and recoverable towards its recovered configuration; characterised in that it is recoverable with sufficient force to deform the substrate outer wall over at least a part of the mating area, such that on recovery it assumes a shape (20) of the mating area of the connector body to retain the substrate and connector body together.

Preferably, the driver member is made from a polymeric material, and especially from an engineering plastics material, which is capable of having the property of heat recoverability imparted to it. Such materials include the olefin polymers of which are preferred high density polyethylene, polypropylene, polybutene-1, poly 4-methyl pentene and fluorinated polyolefins for example, ethylenetrifluorochloroethylene copolymers, ethylenetetrafluoroethylene copolymers, and vinylidene fluoride polymers, especially polyvinylidene fluoride, and blends thereof, for example the fluorinated olefin blends as described and claimed in British Patent No. 1,120,131, polyesters, for example, polyethylene terephthalate, polytetramethylene terephthalate for example that treated as described in British Patent Specification No. 1,486,207 polyphenyleneoxide and sulphide, blends of polyethylene oxide with styrene, silicone-carbonate block copolymers, polyketones, such as polyarylether ketones, for example, those described and claimed in British Patent Nos. 1,387,303 and 1,383,393, polysulphones, for example, polyaryl sulphones, polyarylether sulphones, polyetherimides, for example those described in U.S. Patent No. 3,847,867, polycarbonates especially those derived from bis phenol-A, polyamides, especially those described and claimed in British Patent No. 1,287,932, epoxy resins and blends of one or more of the above mentioned polymeric materials either with each other or with other polymeric materials.

A more detailed discussion of the above materials is found in British Specification No. 1,529,351.

Driver members made of engineering plastics have the ability to deform the rigid outer wall of the substrate without destroying it and also plastically to deform to a particular shape to lock the substrate to the connector body. Additionally, engineering plastics have the ability to change greatly in transverse dimension (diameter) between their unrecovered and recovered states as will be explained more fully hereinafter. This enables the coupling in accordance with this invention to accommodate a wide tolerance range in the size of substrates.

The connector body is preferably made from the same material as the substrate. This advantageously discourages corrosion between the connector body and the substrate. As examples of materials that may be used for the connector body there may be mentioned aluminium, stainless steel or copper.

In a preferred embodiment the connector body includes sizing means for adapting the connector body to substrates having a range of sizes.

Additionally, in some applications it is advantageous to provide the connector body with a mating or antirotational means which prevents rotational movement of the substrate with respect to the connector body. This mating or anti-rotational means may be a type which penetrates the surface of the substrate wall or may be a type which shapes the substrate wall to prevent rotational movement. Alternatively, the substrate may be provided with such antirotational means which penetrates the surface of the connector body or shapes the connector body wall to prevent rotational movement of the connector body with respect to the substrate.

In one embodiment the mating means defines a raised ring having outwardly extending teeth for penetrating the surface only of the substrate wall and thereby preventing rotational movement of the substrate wall with respect to the connector body. In another embodiment the mating means defines a hexagon ring whereby upon recovery and deformation of the substrate wall, each of the edges of the hexagon ring penetrates the surface only of the wall, thereby preventing rotational movement of the substrate wall with respect to the connector body. Where the connector body also includes sizing means the hexagon ring is preferably provided adjacent the sizing means.

There are various embodiments of the coupling assembly in accordance with this invention. One embodiment is an inside connector, wherein the connector body fits inside the substrate. Using this embodiment with a coaxial cable of the type described above requires that the dielectric be removed or cored from the cable and the connector body be fitted between the centre conductor and the jacket.

In this type of embodiment, the driver member comprises a band of heat recoverable material which is positioned so as to surround the connector body/substrate combination at the mating area such that upon heating the driver member recovers and deforms the substrate.

In a preferred embodiment the connector body includes an end connector for sealing one end of the connector body such that the coupling defines a pneumatic coupling.

Preferably the coupling assembly comprises means for visually determining recovery of the driver member. In one embodiment the means for visually determining recovery comprises the driver member having an enlarged end zone spaced away from the connector body and the driver member. Preferably the enlarged end zone defines a flared end zone. In one embodiment an annular groove is provided in the flared end zone.

In accordance with another aspect of the present invention, there is provided a method of obtaining a coupling between an elongate substrate having a rigid wall and a coupling assembly in accordance with this invention, the steps comprising: positioning the connector body concentrically within the substrate; positioning the driver member so that it simultaneously surrounds the connector body and the substrate; and thereafter, recovering the driver member. Preferably the driver member is selectively recovered such that a portion of the driver member visibly recovers after the remaining portion has already recovered.

The method may also include conductively and convectively heating that portion of the driver member which recovers initially and only convectively heating that portion of the driver member which is spaced away from the connector body and cable such that the driver member recovers subsequently.

In a preferred embodiment the substrate and the connector body are capable of conductively heating the driver member.

Coupling assemblies and methods, each in accordance with the present invention, will now be described, by way of example, with reference to the accompanying drawings, in which:—

Figure 1 is partial cross sectional view of a coupling assembly in accordance with this invention, after heat recovery.

Figure 2 is a cross sectional view of the coupling assembly of Figure 1 without the driver member and substrate, taken along line 2—2 of Figure 1.

Figure 3 is a partial cross sectional view of another embodiment of a coupling assembly in accordance with this invention.

Figure 4 is a partial cross sectional view of another embodiment of a coupling assembly in accordance with this invention in the form of a CATV pin connector.

Figure 5 is a partial cross sectional view of another embodiment of a coupling assembly in accordance with this invention in the form of a CATV cable splice connector.

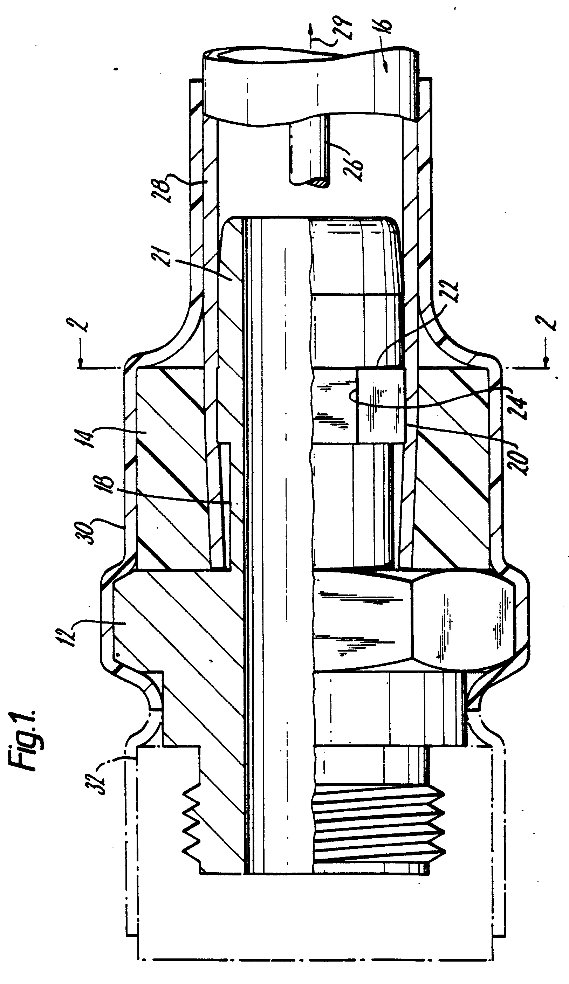

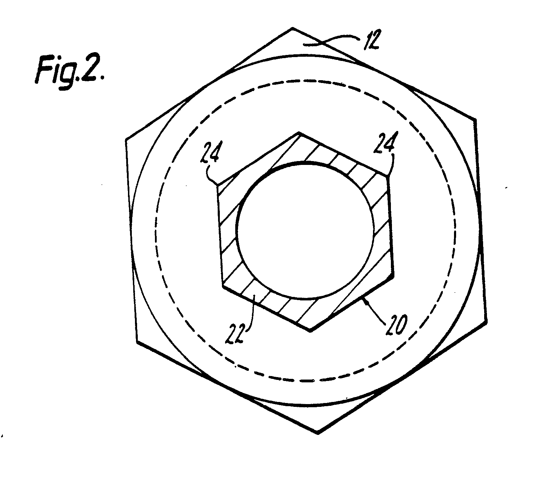

With reference to the drawing, wherein like referenced characters designate like or corresponding parts throughout the several views and referring particularly to Figures 1 and 2, there is shown a coupling assembly of this invention. The device includes a connector body 12 and a driver member 14. For purposes of explanation only, the rigid walled substrate chosen to be described in connection with the preferred embodiment is a coaxial cable 16. Further, for purposes of clarity, the discussion herein is generally limited to termination of the rigid jacket 28 of cable 16. In this embodiment jacket 28 is the substrate which the driver member 14 deforms against connector body 12 at the mating area 18.

The connector body 12 is generally cylindrical and hollow. The body 12 has a mating area 18 which is surrounded by jacket 28. As will be discussed more fully hereinafter, the cable's rigid jacket mates with the connector body 12 at the mating area 18 after heat recovery of the driver member 14. The mating area 18 includes a mating or antirotational means 20 for engaging jacket 28, which comprises a hexagonal ring 22 having six edges 24 which penetrate the surface, only, of jacket 28. As a result of such penetration, the edges 24 serve as a means for preventing rotational movement of the cable 16 in relation to the connector body 12.

The connector body 12 also includes a cable sizing means 21. The jacket 28 of cable 16 is typically made from aluminium which, while being rigid, is malleable. The cable sizing means comprises an enlarged head with an outside diameter approximately the same as the largest anticipated inside diameter of jacket 28. When the jacket 28 of cable 16 slides over the cable sizing means 21, the jacket of cable 16 is expanded outwardly. Thusly, the connector body is able to accommodate a wide tolerance range of cables, while assuring good electrical and physical contact between the connector body 12 and the cable 16.

Additionally, the connector body 12 is made from the same material as the jacket 28 of the cable 16 for discouraging corrosion between the body 12 and the jacket of cable 16. In this case, the connector body 12 and the jacket 28 of cable 16 are made from aluminum. Similar materials could, of course, be used, e.g. stainless steel or copper.

The driver member 14 is the same for all of the preferred embodiments as illustrated in Figs. 1 through 7. The driver member 14 is made from a band of heat recoverable material which is capable of dimensional change. Materials which are suitable for making the driver member include the family of materials known as engineering plastics in particular the crystalline engineering plastics such as polyamides, polyesters and polyarylether ketones. Preferred materials also include those found in British Specification 1,529,351, page 2, lines 51 through 98, as set forth previously. Most preferred materials are the polyketones of British Specification 1,387,303.

Additionally, it may be desirable to make the driver member from material which is cross linked, either by chemical means or by irradiation.

These materials include certain engineering or non-engineering plastics which perform the function of the previously included materials. For a more detailed explanation of cross linking of such materials and their performance see U.S. Patent Nos. 2,027,962 and 3,086,242.

The driver member 14 is a ring having an unrecovered transverse dimension (diameter) which is larger than the outside diameter of jacket 28 of the cable 16. Additionally, the cross section of the unrecovered ring is generally uniform. Upon warming the driver member 14 to its recovery temperature, the driver member decreases in diameter to a diameter which is smaller than the outside diameter of the jacket 28 of cable 16. The material selected recovers with sufficient force, known as recovery hoop strength, to deform the rigid jacket 28 of the cable 16. Further, the material plastically deforms such that the inner portion of the driver member permanently assumes the shape of the exterior of the deformed jacket 28 in combination with the mating means 20 and the mating area 18. In general, after recovery the cross section of the driver member is non-uniform as a result of contact with and deforming of the substrate, jacket 28.

The cable 16 includes a centre conductor 26, foam dielectric (not shown) surrounding the centre conductor 26 and jacket 28 made of relatively rigid material which is an electrical shield. Jacket 28 is commonly made from aluminum. The cable television industry typically uses such constructions for their cables to transmit 5 watt to 10 watt signals in the 10 to 500 MHZ frequency range.

In order to terminate the shield or jacket 28 to the connector body 12, the cable 16 is cored. In other words, the dielectric is removed from between the shield 28 and the centre conductor 26. The driving member 14 is slipped over the cable jacket 28. The cable jacket 28 is positioned around the connector body 12, such that it is adjacent the mating area 18 and mating means 20. Simultaneously, the centre conductor is inserted through the hollow body 12. In order to complete the termination of the cable shield 28, the driver member 14 is recovered.

The driver member 14 is warmed to a temperature sufficient to begin recovery. Thereupon, the driver member 14 shrinks, decreasing its transverse dimension (diameter) until it engages the jacket 28. As recovery continues, the driver member 14 exerts a sufficient recovery hoop strength to deform the shield 28 over the mating means 20 and along the mating area 18 as shown in Fig. 1. The driver member 14 itself possesses the quality of plasticity and plastically deforms during recovery such that the inner portion assumes the shape of the exterior of the deformed jacket 28 in combination with the mating area 18 and the mating means 20. The general shape of the cross-section driver member upon recovery and plastic deformation has become wedge shaped compared with its unrecovered generally uniform cross-section.

This wedge shaped cross section is of particular importance. If an axial force pulls the cable jacket 28 in a direction away from the connector body 12, a normal force will be created against the driver member. More particularly, as the axial force is applied to cable 16, as shown by the arrow 29, the jacket 28 will attempt to disengage from the connector body 12. Since the jacket 28 has been deformed (angulated) by the driver member 16, a component of the axial force will be resolved against and normal to the driver member 14. The driver member 14 will, because of its wedge shape, exert a force equal and opposite to the normal force component against the jacket 28, thereby preventing disengagement of the cable 16 with the connector body 12.

Typically, such cable with their couplings are exposed to the outside environment. Electrical connections and terminations such as those described herein may be adversely affected by such exposure to rain, snow, heat, cold, wide temperature fluctuations, ultra violet radiation, oxidation, pollution, salt spray and the like. Hence, it is preferred in those applications to protect the above described termination by sealing. One method of sealing the termination includes surrounding the driver member 14, connector body 12 and cable 16 with a heat shrinkable polymeric sleeve 30. The sleeve 30 is recovered until the sleeve tightly grasps the cable termination and connector body 12 as shown in Figure 1. Other materials such as use of epoxy, mastic and other materials placed in critical areas where water or the like might seep in can be used to seal the termination from the environment.

It may be desirable to connect the sleeve 30 directly to the driver member 14. Further, it may be desirable to have sleeve 30 and driver member 14 form one integral part and that integral may be desirably an engineering plastic.

After sealing the termination in accordance with the above, the centre conductor 26 may be connected to a like conductor of another cable, simply terminated or connected to some electrical component. The remaining portion of connector body 12 is adapted to permit such flexibility.

Additionally, the coupling assembly of Figure 1 may be used as a pneumatic coupling. By closing off one end of the coupling, such as placing an end connector 32 over one end of the connector body 12, an air tight seal is created to terminate cable 16.

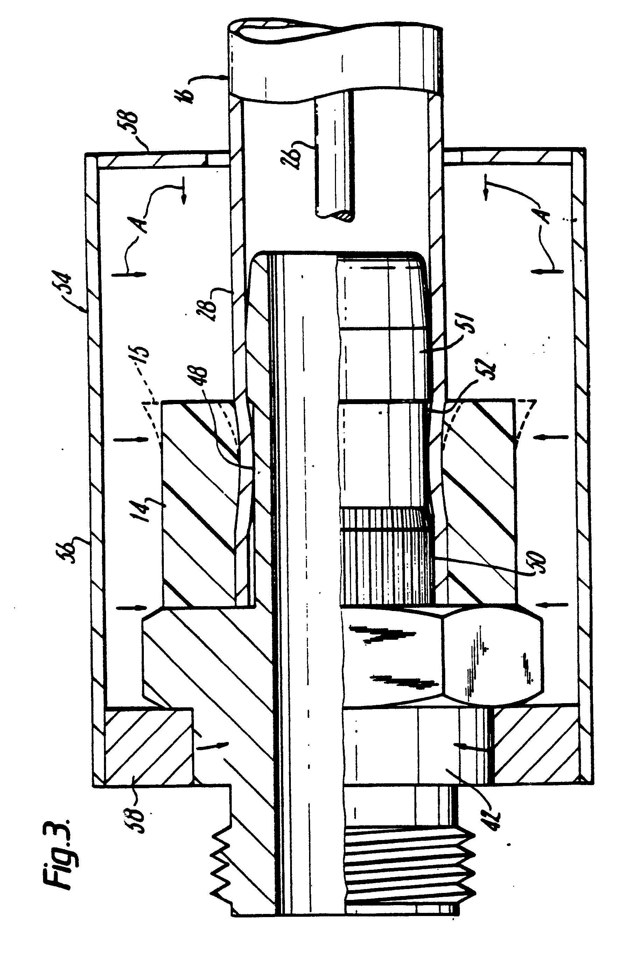

Another embodiment of the invention will now be described with particular reference to Figure 3. Similar to the coupling assembly of Figure 1, the coupling assembly of Figure 3 includes a connector body 42, and a driver member 14 for terminating the jacket 28 of the cable 16.

Generally, the connector body 42 is the same as connector body 12 and functions in a similar manner. Body 42 includes a mating area 48 having a mating means 50 as well as a cable sizing means 51 which operates precisely the same as cable sizing means 21.

The mating means 50, however, includes a plurality of outwardly extending teeth which penetrate the surface only of jacket 28 instead of hexagonal ring 22 of Figure 1. Upon recovery of driver member 14, the cable shield is forced into intimate contact with the teeth of mating means 50 for penetration of the surface only of jacket 28. The mating means 50 comprises a raised ring which leaves a flat area 52 between sizing means 51 and mating means 50. As recovery continues, the driver member 14 deforms the jacket 28 such that it contacts the flat area 52. Upon recovery, the driver member 14 has once again plastically deformed with a non-uniform cross section defining a wedge shape.

Basically, the embodiments of Figs. 1 and 2 and 3 function similarly. However, the hexagonal ring mating means 20 has been replaced by the raised ring of the mating means 50. Additionally, the jacket 28 is deformed between two raised surfaces, namely the sizing means 51 and the mating means 50 of the embodiment of Fig. 3, instead of along the hexagonal ring 22 as in the embodiment of Figs. 1 and 2. Additionally, the teeth of means 50 have replaced hexagonal edges 24 and, similarly, the teeth 50 provide a means for discouraging rotation between the connector body 42 and the cable 16.

In the embodiment of Fig. 3, as in all the embodiments of this invention, it is desirable to have uniform heating of the heat recoverable driver member 14. Figure 3 illustrates a structure for accomplishing same.

As shown in Fig. 3, the connector body 42 includes uniform heating means 54, which comprises a hood 56 having downwardly extending arms 58. Heat is applied to the exterior of the means 54 by torch or the like. Alternatively, the hood may be made from conductive material and an electrical heat source may be provided to heat conductor body 42 and in turn means 54. In either alternative, the driver member 14 is warmed until it recovers by convection and conduction. Heat applied to means 54 warms driver member 14 through convection as illustrated by arrows A. Heat is also applied to driver member 14 by conduction as it travels through the connector body 42 and more directly through conduction through the jacket 28. Such warming of both the inside and the outside of the driver member 14 provides more uniform heating thereof and allows the inside and outside to recover at the same time thereby promoting uniform recovery of the driver member 14.

It may be desirable to make the inside portion of driver member 14 flow during recovery. Thus, if the cable 16 should pull away slightly from the connector body 12, the flowed portion of driver member 14 will act as a means to seal the gap between the body 12 and cable 16. Additionally, such flowing of the driver member 14 serves as a means for indicating sufficient recovery of driver member 14. Such flowing of the driver member 14 may be accomplished by means of inside heating as described above.

In the preferred embodiments shown in Fig 3, the coupling includes means for visually determining recovery of the driver member. In the embodiment illustrated in Fig. 3, the means comprises the driver member 14 having a flared end zone 15. The end zone 15 is flared away from contact with the cable 16 and connector body 12. As heat is applied to the connector body 12 or the cable jacket 28, the driver member is heated by conduction and subsequently recovers, as described above. The end zone 15 may be flared away from the connector body 12 and jacket 28 does not get the benefit of such conductive heating. End zone 15 relies solely on convective heating, as described above, to achieve a temperature sufficient for recovery. Hence end zone 15 will recover after the remaining portion of driver member 14. It will be appreciated that a field technician or the like can visually observe when the end zone 15 has recovered, since it will no longer be flared.

Another embodiment of the means for visually determining recovery of the driver member comprises notching the driver so that an annular groove appears in the driver member, after recovery. Prior to recovery the flared portion obscures the groove and after recovery, the groove becomes visible.

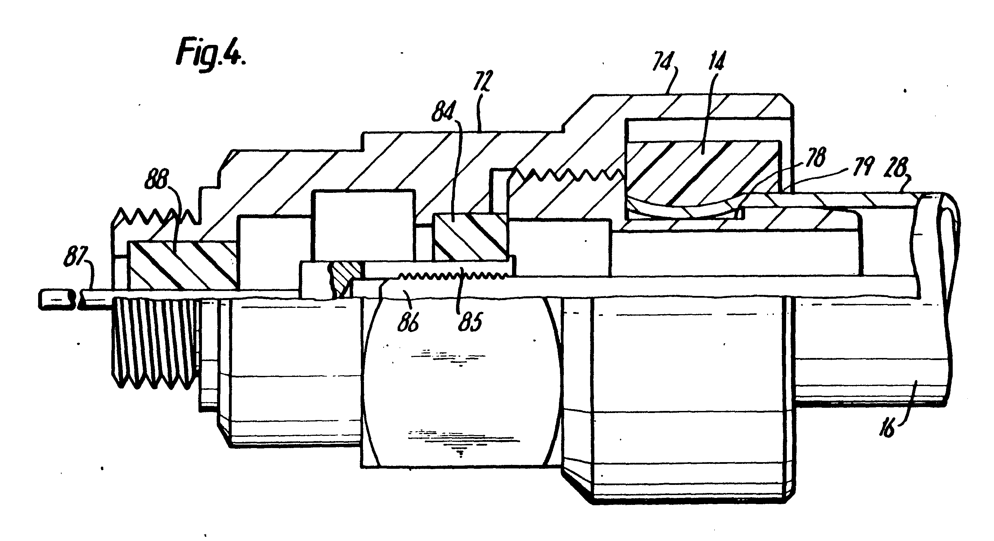

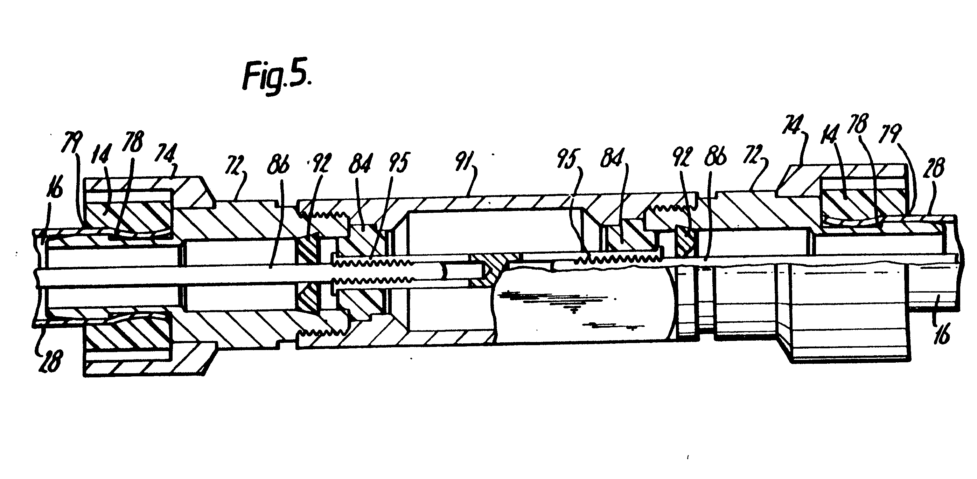

Figures 4 and 5 illustrate additional embodiments of the coupling assembly in accordance with this invention. Similar to previously described embodiment in Figure 3, Figures 4 and 5 include connector body 72, the heat recoverable driver member 14 and mating area 78 for engaging jacket 28 of cable 16. Hood 74 in this embodiment is an integral part of connector body 72 and provides means for protecting driver member 14 from direct contact with the flame when the heat source is a torch. Hood 74 also provides means for more even heating of driver member 14 by providing convection heating through the air space between the interior of hood 74 and driver member 14. Conduction heating also occurs through jacket 28. In this embodiment, hood 74 is not enclosed and provides access for visual inspection of driver member 14 during heating. It has been found that when driver member 14 has been heated sufficiently to recover, a roll of the flowing portion of the driver member will appear at corner 79 as a visual signal that sufficient heat has been applied.

An additional feature illustrated in Figures 4 and 5 (but not specifically the subject of a claim) is the use of an additional driver member 84 around the pin connector body 85 in Figure 4 and around pin connector body 95 in Figure 5. Pin connector bodies 85 and 95 are slotted to allow deformation thereof upon recovery of driver member 84 to engage substrate 86, which is the centre conductor of cable 16. In Fig. 4 the centre conductor 86 is connected through pin connector body 85 to connector pin 87 which passes through the end of connector body 72 through dielectric 88. During heating of connector body 72, hood 74 and jacket 28 to recover driver member 14, driver member 84 is simultaneously recovered through conduction and convection heating. In this embodiment the connector body assembly of this invention simultaneously connects jacket 28 of cable 16 to connector body 72 and centre conductor 86 to the pin connector 85. As in the other embodiments of this invention, when driver member 84 recovers it deforms pin connector body 85 permanently to engage centre conductor 86 and driver member 84 plastically deforms and permanently assumes the shape of the exterior of the deformed pin connector body 85. Pin connector body 85 has teeth on the mating area made by a thread tap which engages and penetrates the surface of centre conductor 86.

The connector of Figs. 1 and 3 are generally known in the art as "feed-thru connectors." The embodiment shown in Figure 4 is known in the art as a "pin connector." The embodiment shown in Figure 5 is commonly known in the art as a "splice connector."

In the embodiment of Figure 5 driver members 14 and 84 function the same as in Figure 4 except that driver member 84 deforms the splice connector body 95 to engage centre conductor 86. Splice connector body 95 has teeth on the mating surface similar to splice connector body 85. Connector body 72 is assembled with splice sleeve 91 which in turn is connected to a second connector body 72. Splice connector body 95 has an opposite end which likewise deforms and grips the centre conductor 86 of cable 16 entering the opposite end of the splice connector of Figure 5. One additional element which the splice connector of Fig. 5 contains which is not included in the other embodiments of Figures 1 through 4 is guide 92 which is made of a dielectric material and is positioned such that when centre conductor 86 is inserted in the connector body 72, it passes through a conical hole in the centre of the guide 92 whereby guide 92 then holds centre conductor 86 in fixed centred position to assure proper insertion of centre conductor 86 into splice connector body 95 when connector body 72 containing cable 16 is assembled with splice sleeve 91 or when cable 16 is inserted into connector body 72 which is already assembled with splice sleeve 91.

The driver member has been described with reference to materials which constitute engineering plastics. It will be appreciated that other materials are also suitable but are too numerous to mention specifically here. Additionally, the description of the invention has focused upon connectors for a coaxial cable. It will be appreciated that other substrates, such as refrigerator tubing or other tubing or piping and other elongate substrates having rigid outer walls in combination with connectors therefor are contemplated.

## Claims

1. A coupling assembly for coupling to a substrate (16) having a relatively rigid outer wall, the assembly comprising a connector body (12) positionable relative to the substrate (16) such that mating areas of the substrate outer wall (28) and the connector body (12) are at least in part adjacent, the connector mating area being within an outer wall mating area of the substrate (16), and a dimensionally-recoverable driver member (14) made from a heat-recoverable material having the property of plasticity, the driver member (14) being capable of surrounding the positioned connector body (12) and substrate (16) outer wall combination over at least a portion of the mating area and being capable of dimensional recovery from an unrecovered configuration in which the transverse dimension is greater than that of the positioned connector body and substrate outer wall combination to a recovered configuration in which the transverse dimension is smaller than that of the positioned connector body and substrate outer wall combination, the driver member being plastically deformable and recoverable towards its recovered configuration; characterized in that it is recoverable with sufficient force to deform the substrate outer wall over at least a part of the mating area, such that on recovery it assumes a shape (20) of the mating area of the connector body (12) to retain the substrate (16) and connector body (12) together.

2. A coupling assembly according to claim 1, wherein the mating area and mating means are arranged such that the driver member assumes a wedge shape after recovery.

3. A coupling assembly according to claim 2, wherein mating means are provided at the mating area of the connector body, the mating means having means for penetrating the surface only of the substrate to prevent rotational movement of the substrate relative to the connector body.

4. A coupling assembly according to any of claims 1—3, wherein the driver member is made from a polymeric material, which is capable of having the property of heat recoverability.

5. A coupling assembly according to claim 4, wherein the material is capable of being crosslinked.

6. A coupling assembly according to any preceding claim and wherein the connector body includes sizing means for adapting the connector body to substrates having a range of sizes.

7. A coupling assembly according to any preceding claim wherein the assembly includes means for uniformly warming the driver member.

8. A coupling assembly according to claim 7, wherein said means for uniformly warming comprises a hood whereby the driver member is protected from direct flame.

9. A coupling assembly according to any preceding claim comprising means for visually determining recovery of the driver member.

## Patentansprüche

1. Kupplungsanordnung zur Verbindung mit einem Substrat (16), das eine relativ starre Außenwand hat, wobei die Anordnung einen Verbinderkörper (12), der relativ zum Substrat (16) so positionierbar ist, daß zusammenpassende Bereiche der Substrataußenwand (28) und des Verbinderkörpers (12) zumindest teilweise aneinander angrenzen, wobei der Verbinderpassungsbereich innerhalb eines Außenwandpassungsbereiches des Substrats (16) liegt, und ein dimensionsmäßig rückstellbares Treiberteil (14) aufweist, bestehend aus einem wärmerückstellbaren Material mit der Eigenschaft der Plastizität, wobei das Treiberteil in der Lage ist, die Kombination aus positioniertem Verbinderkörper (12) und Außenwand des Substrats (16) über zumindest einen Teil des Passungsbereiches zu umgeben, und zu einer dimensionsmäßigen Rückstellung aus einer nicht-rückgestellten Konfiguration, in der die Querabmessung größer ist als die der positionierten Kombination aus Verbinderkörper und Substrataußenwand, in eine rückgestellte Konfiguration in der Lage ist, in der die Querabmessung kleiner ist als die der positionierten Kombination aus Verbinderkörper und Substrataußenwand, wobei das Treiberteil plastisch verformbar und in seine rückgestellte Konfiguration rückstellbar ist; dadurch gekennzeichnet, daß es mit ausreichender Kraft rückstellbar ist, um die Substrataußenwand über zumindest einen Teil des Passungsbereichs zu verformen, so daß sie bei der Rückstellung eine Gestalt (20) des Passungsbereiches des Verbinderkörpers (12) annimmt, um das Substrat (16) und den Verbinderkörper (12) zusammenzuhalten.

2. Kupplungsanordnung nach Anspruch 1, wobei der Passungsbereich und die zusammenpassenden Einrichtungen so angeordnet sind, daß das Treiberteil nach der Rückstellung eine Keilform annimmt.

3. Kupplungsanordnung nach Anspruch 2, wobei zusammenpassende Einrichtungen im Passungsbereich des Verbinderkörpers vorgesehen sind, wobei die zusammenpassenden Einrichtungen Mittel aufweisen, um nur die Oberfläche des Substrats zu durchdringen, um eine Drehbewegung des Substrats relativ zum Verbinderkörper zu verhindern.

4. Kupplungsanordnung nach einem der Ansprüche 1—3, wobei das Treiberteil aus einem polymeren Material hergestellt ist, das in der Lage ist, die Eigenschaft der Wärmerückstellbarkeit zu zeigen.

5. Kupplungsanordnung nach Anspruch 4, wobei das Material in der Lage ist, sich vernetzen zu lassen.

6. Kupplungsanordnung nach einem der vorherigen Ansprüche und wobei der Verbinderkörper eine Größenanpassungseinrichtung aufweist, um den Verbinderkörper an Substrate mit einem Bereich von Größen anzupassen.

7. Kupplungsanordnung nach einem der vorherigen Ansprüche, wobei die Anordnung eine Einrichtung aufweist, um das Treiberteil gleichmäßig zu erwärmen.

8. Kupplungsanordnung nach Anspruch 7, wobei die Einrichtung zum gleichmäßigen Erwärmen eine Abdeckung aufweist, mit der das Treiberteil gegenüber einer direkten Flamme geschützt ist.

9. Kupplungsanordnung nach einem der vorherigen Ansprüche, umfassend eine Einrichtung, um die Rückstellung des Treiberteils visuell festzustellen.

**Revendications**

1. Ensemble de raccordement permettant un raccordement sur un substrat (16) comportant une paroi extérieure relativement rigide, cet ensemble comprenant un corps de raccord (12) pouvant être positionné par rapport au substrat (16) de façon que les zones d'accrochage de la paroi extérieure (28) du substrat et du corps de raccord (12) soient au moins en partie adjacentes, la zone d'accrochage du raccord se trouvant à l'intérieur d'une zone d'accrochage de la paroi extérieure du substrat (16), et une pièce active (14), à possibilité de restauration des dimensions, en un matériau thermorétractable possédant la propriété de plasticité, cette pièce active (14) étant capable d'entourer la combinaison du corps de raccord (12) positionné et de la paroi extérieure du substrat (16) sur au moins une partie des zones d'accrochage et étant capable d'une restauration de dimensions, d'une configuration non restaurée, dans laquelle la dimension transversale est supérieure à celle de la combinaison du corps de raccord positionné et de la paroi extérieure du substrat, à une configuration restaurée dans laquelle la dimension transversale est inférieure à celle de cette combinaison du corps de raccord positionné et de la paroi extérieure du substrat, cette pièce active étant déformable plastiquement et restaurable vers sa configuration restaurée, cet ensemble étant caractérisé en ce qu'il est restaurable avec une force suffisante pour déformer la paroi extérieure du substrat sur au moins une partie de sa zone d'accrochage, de façon telle que, à la restauration, il adopte une forme (20) de la zone d'accrochage du corps de raccord (12) de façon à maintenir ensemble le substrat (16) et ce corps de raccord (12).

2. Ensemble de raccordement suivant la revendication 1, dans lequel la zone d'accrochage et les moyens d'accrochage sont disposés de façon telle que la pièce active adopte une forme en coin après restauration.

3. Ensemble de raccordement suivant la revendication 2, dans lequel des moyens d'accrochage sont prévus à l'endroit de la zone d'accrochage du corps de raccord, ces moyens d'accrochage comportant des moyens destinés à pénétrer uniquement dans la surface du substrat de façon à empêcher un mouvement de rotation de ce substrat par rapport au corps de raccord.

4. Ensemble de raccordement suivant l'une quelconque des revendications 1 à 3, dans lequel la pièce active est en une matière polymère qui est susceptible d'offrir la propriété de thermorétractibilité.

5. Ensemble de raccordement suivant la revendication 4, dans lequel la matière est susceptible d'être réticulée.

6. Ensemble de raccordement suivant l'une quelconque des revendications précédentes, dans lequel le corps de raccord comporte des moyens de mise à dimension qui permettent d'adapter ce corps de raccord à des substrats présentant une certaine gamme de dimensions.

7. Ensemble de raccordement suivant l'une quelconque des revendications précédentes, dans lequel cet ensemble comprend des moyens permettant d'élever de manière uniforme la température de la pièce active.

8. Ensemble de raccordement suivant la revendication 7, dans lequel les moyens permettant d'élever de manière uniforme la température sont constitués par une cloche grâce à laquelle la pièce active est protégée du chauffage direct d'une flamme.

9. Ensemble de raccordement suivant l'une quelconque des revendications précédentes, comprenant des moyens permettant de vérifier visuellement la restauration de la pièce active.

Fig.1.

Fig.2.

Fig.3.

Fig.4.

**Fig.5.**